# DEMANDE DE BREVET EUROPEEN

(11) **EP 4 787 681 A1**
(43) Date de publication de la demande: **05.08.2026**
(21) Numéro de dépôt: 26155510.6
(22) Date de dépôt: 30.01.2026
(51) Int. Cl.: H02K 11/20, H02K 11/40, H02K 9/06

(54) **DISPOSITIF POUR MACHINE TOURNANTE ÉLECTRIQUE**

(30) Priorité: 03.02.2025 FR 2501075
(71) Demandeur: Société Nivolaisienne d'Electrotechnique (SNE), 38300 Nivolas-Vermelle (FR)
(72) Inventeur: HOLLARD, Mathieu, 38300 NIVOLAS-VERMELLE (FR)
(74) Mandataire: Bouvier, Thibault

(57) **Abrégé**

Dispositif (10) configuré pour être monté de manière amovible sur un capot de ventilation (330) d'une machine tournante électrique (300) comprenant un arbre (310) et un rotor (320), comprenant :
- un corps principal (100), coaxial avec l'axe de l'arbre tournant (310), comprenant un élément sensible (110) qui vient à distance ou au contact de l'arbre tournant (310);
- un corps secondaire (200), destiné à venir au contact d'une face externe du capot de ventilation (330),
- un premier élément de contact (400) destiné à venir au contact d'une face du capot de ventilation (330), en vis-à-vis du corps secondaire (200), de sorte que lorsque le dispositif est monté sur le capot, le capot est pincé au moins par le premier élément de contact (400), le corps principal (100) étant mobile au moins en translation par rapport au corps secondaire (200).

## Description

La présente invention concerne le domaine des dispositifs pour machines tournantes électriques, notamment, mais pas seulement, pour la gestion des courants de palier de celles-ci.

Les courants de palier dans les machines tournantes électriques sont bien connus, et leurs effets délétères sur ceux-ci également.

Les courants de palier ont toujours existé dans les moteurs électriques et sont à l'origine d'un grand nombre d'avaries, dont la détérioration graduelle des pistes de roulement du moteur.

En effet, les chaînes de motorisation asynchrone de forte puissance sont entrées dans une phase de maturité depuis plusieurs années. Néanmoins des problèmes subsistent, liés à l'alimentation de ces moteurs par des convertisseurs statiques dont les commutations sont de plus en plus rapides. Les fronts de tension engendrés par les commutations de l'électronique de puissance sont à l'origine du développement de courants parasites se propageant dans toute la machine tournante électrique. Leur circulation est liée à des phénomènes complexes tant d'un point de vue électrostatique que magnétique et ce dans le domaine des hautes fréquences. Les ordres de grandeurs actuels conduisent couramment à des phénomènes dans la gamme de fréquence du MHz. Une partie de ces courants traversent les paliers de la machine tournante électrique et, suivant leurs amplitudes, sont susceptibles d'occasionner des dégradations à plus ou moins long terme.

Lorsque des tensions d'arbre du moteur dépassent la capacité d'isolement de la graisse à roulement, des courants dirigés vers le roulement extérieur peuvent se présenter et entraîner l'apparition de piqûres et de rainures sur les bagues de roulement. Ces courants sont dus à l'accumulation d'énergie électrostatique au rotor de la machine qui se décharge brutalement lorsque le champ électrique est suffisant pour "claquer" la graisse isolante des roulements. Ce problème se traduit d'abord par l'apparition d'un bruit accompagné d'une surchauffe, due au fait que les roulements commencent à perdre leur forme d'origine et que des fragments de métal se mélangent à la graisse et aggravent la friction. Ceci risque de provoquer la destruction du roulement en à peine quelques mois.

Pour prévenir cette dégradation, il est connu qu'il convient d'établir la mise à la terre du moteur, c'est-à-dire de sa carcasse et de son arbre, par exemple selon la solution décrite dans la demande FR3147059 déposée par la demanderesse.

Bien que donnant satisfaction, dans cette solution on prévoit fixer une platine de fixation sur un capot de ventilation d'une machine tournante électrique, ce qui pose des problèmes de flexibilité et de manipulation.

La présente invention vise à résoudre ce problème.

A cet effet, selon un premier de ses objets, la présente invention concerne un dispositif (10) pour machine tournante électrique (300), la machine tournante électrique (300) comprenant un arbre tournant (310), un rotor (320) et un capot de ventilation (330),
ledit dispositif étant configuré pour être monté sur le capot de ventilation (330) grâce à un évidement dudit capot de ventilation (330), de manière amovible.

Il est essentiellement caractérisé en ce que ledit dispositif comprend :
- un corps principal (100), présentant une forme allongée et supportant à une de ses extrémités un élément sensible (110), et une cosse (120) à l'autre de ses extrémités ;
- un corps secondaire (200), destiné à venir au contact d'une face externe du capot de ventilation (330) et comprenant :
   ∘ un moyeu (210) dont la forme épouse localement celle du corps principal (100),
   ∘ le corps principal (100) étant mobile au moins en translation par rapport au corps secondaire (200) à travers ledit moyeu (210),
- le corps principal (100) et le corps secondaire (200) étant configurés de sorte que, lorsque le dispositif est monté sur le capot de ventilation (330), le corps principal (100) est coaxial avec l'axe de l'arbre tournant (310), et l'élément sensible (110) vient au contact de l'arbre tournant (310) ou à une distance prédéterminée, réglable, de l'arbre tournant (310) ;
- des moyens de blocage, configurés pour bloquer le mouvement de translation du corps principal (100) par rapport au corps secondaire (200) et assurer une solidarisation temporaire du corps principal (100) et du corps secondaire (200), permettant d'ajuster la distance entre l'extrémité portant l'élément sensible (110) et l'arbre tournant (310) ;
le dispositif comprenant en outre :
- un premier élément de contact (400) mobile en translation selon l'axe d'élongation du corps principal (100) et destiné à venir au contact d'une face du capot de ventilation (330), en vis-à-vis du corps secondaire (200) de sorte que lorsque le dispositif est monté sur le capot, le capot est pincé entre un premier élément de pinçage et un deuxième élément de pinçage, dont l'un parmi le premier et le deuxième élément de pinçage est le premier élément de contact (400).

On peut prévoir que le corps secondaire (200) comprend une collerette (230), faisant office de platine de fixation, la collerette (230) comprenant un ensemble d'au moins trois évidements, la collerette (230) faisant office d'autre élément de pinçage.

On peut prévoir que le premier élément de contact (400) comprend un ensemble d'au moins trois évidements.

On peut prévoir que au moins un évidement présente une forme circulaire, éventuellement taraudée, pour permettre le passage d'une vis ou d'une tige filetée.

On peut prévoir que au moins un évidement présente une forme allongée de préférence courbe, l'ensemble des évidements étant de préférence à symétrie de rotation par rapport à l'axe du moyeu (210).

On peut prévoir que le corps secondaire (200) comprend une face externe qui présente un filetage, et dans lequel le premier élément de contact (400) comprend un taraudage correspondant au filetage du corps secondaire (200), de sorte que le premier élément de contact (400) est mobile en rotation et en translation par rapport au corps secondaire (200) pour venir en butée contre le capot de ventilation (330), le corps secondaire (200) faisant saillie de part et d'autre de l'évidement du capot lorsqu'il est monté sur celui-ci.

On peut prévoir en outre un deuxième élément de contact (500), faisant office d'autre élément de pinçage, le deuxième élément de contact (500) comprenant un taraudage correspondant au filetage du corps secondaire (200), de sorte que le deuxième élément de contact (500) est mobile en rotation et en translation par rapport au corps secondaire (200) pour venir en butée contre le capot de ventilation (330), sur une face opposée à celle contre laquelle le premier élément de contact (400) vient en butée.

On peut prévoir que au moins l'un parmi le premier élément de contact (400) et le deuxième élément de contact (500) comprend un ensemble d'au moins deux protubérances, ou ailettes, de sorte à faciliter sa manipulation en rotation.

On peut prévoir que le corps principal (100) comprend au moins l'un parmi :
- un capteur inductif ;
- un dispositif de mise à la terre de la machine tournante électrique (300), le corps principal (100) étant conducteur d'électricité, et supportant à une de ses extrémités un ensemble de fibres conductrices (110) agencées pour permettre la mise à la terre des courants de fuite induits relatifs au rotor (320) dans la machine tournante électrique (300), et une cosse (120) de mise à la terre à l'autre de ses extrémités.

On peut prévoir que le dispositif comprend :
- un capteur, inductif, capacitif ou magnétique, et
- un dispositif de mise à la terre de la machine tournante électrique (300),
le capteur inductif, capacitif ou magnétique et le dispositif de mise à la terre de la machine tournante électrique (300) étant interchangeables dans le moyeu (210) du corps secondaire (200).

D'autres caractéristiques et avantages de la présente invention apparaîtront plus clairement à la lecture de la description suivante donnée à titre d'exemple illustratif et non limitatif et faite en référence aux figures annexées.
[Fig. 1] illustre une machine tournante électrique sur laquelle est montée une partie d'un dispositif selon l'invention ;
[Fig. 2] illustre un capot de ventilation, partiellement ouvert, d'une machine tournante électrique sur lequel est monté un corps secondaire d'un dispositif selon l'invention ;
[Fig. 3] illustre un mode de réalisation d'un dispositif selon l'invention sur un capot de ventilation, en vue partielle ;
[Fig. 4A] illustre en vue éclatée un mode de réalisation d'un dispositif selon l'invention, avec un mode de réalisation d'un corps principal comprenant un dispositif de mise à la terre des courants de fuite ;
[Fig. 4B] illustre en vue éclatée un autre mode de réalisation d'un dispositif selon l'invention, avec un autre mode de réalisation d'un corps principal comprenant un dispositif de mise à la terre des courants de fuite ;
[Fig. 5] illustre le principe du montage d'un dispositif de l'invention comprenant un dispositif de mise à la terre des courants de fuite sur un capot de ventilation ;
[Fig. 6] illustre un mode de réalisation du montage d'un dispositif de l'invention sur un capot de ventilation ;
[Fig. 7] illustre un mode de réalisation du montage d'un dispositif de l'invention sur un capot de ventilation ;
[Fig. 8] illustre un mode de réalisation du montage d'un dispositif de l'invention sur un capot de ventilation ;
[Fig. 9] illustre un mode de réalisation du montage d'un dispositif de l'invention sur un capot de ventilation ;
[Fig. 10] illustre un mode de réalisation du montage d'un dispositif de l'invention, comprenant un capteur inductif, sur un capot de ventilation ;
[Fig. 11] illustre un mode de réalisation d'un corps secondaire selon l'invention ;
[Fig. 12] illustre un mode de réalisation d'un corps secondaire selon l'invention ;
[Fig. 13] illustre un mode de réalisation d'un premier élément de contact selon l'invention ;
[Fig. 14] illustre un mode de fixation d'une collerette d'un corps secondaire selon l'invention sur un capot de ventilation ; et
[Fig. 15] illustre un mode de fixation d'une collerette d'un corps secondaire selon l'invention sur un capot de ventilation.

### Description détaillée

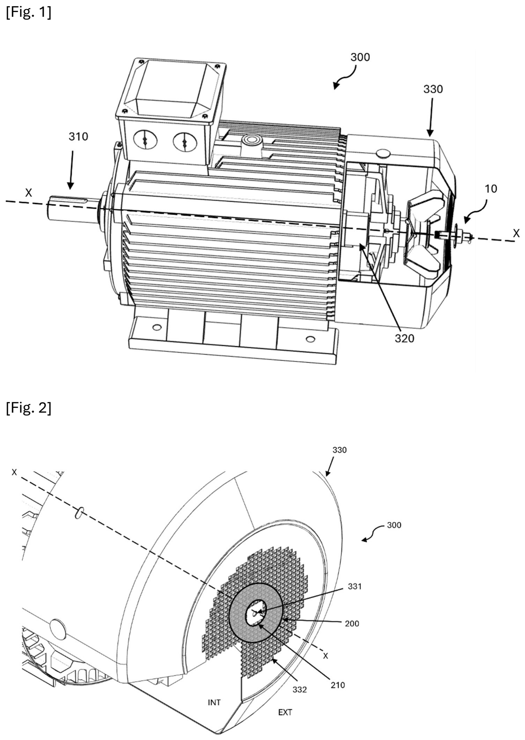

La figure 1 illustre une machine tournante électrique 300, en vue partiellement éclatée, comprenant un arbre tournant 310 selon un axe X-X, un rotor 320 et un capot de ventilation 330 sur lequel est monté une partie d'un dispositif selon l'invention 10.

Le principe de l'invention est de pouvoir fixer sur le capot de ventilation 330, de manière amovible, un dispositif selon l'invention 10, qui permet soit une mise à la terre des courants de fuite induits relatifs au rotor 320 de la machine tournante électrique 300, soit des mesures par un capteur inductif, capacitif ou magnétique. Dans un cas comme dans l'autre, le dispositif de mise à la terre des courants de fuite et le capteur sont coaxiaux avec l'axe X-X de l'arbre tournant 310, grâce au moyeu 210 d'un corps secondaire 200 décrit ultérieurement, lui-même monté coaxial avec l'axe X-X de l'arbre tournant 310, comme illustré sur la figure 2.

Avantageusement, comme décrit ultérieurement, le dispositif selon l'invention 10 permet de pouvoir interchanger un dispositif de mise à la terre des courants de fuite et un capteur inductif, capacitif ou magnétique.

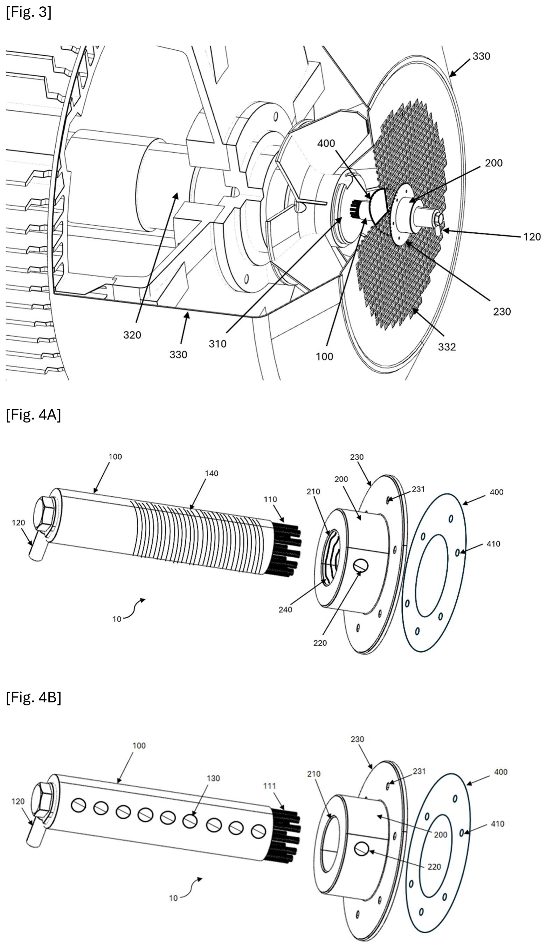

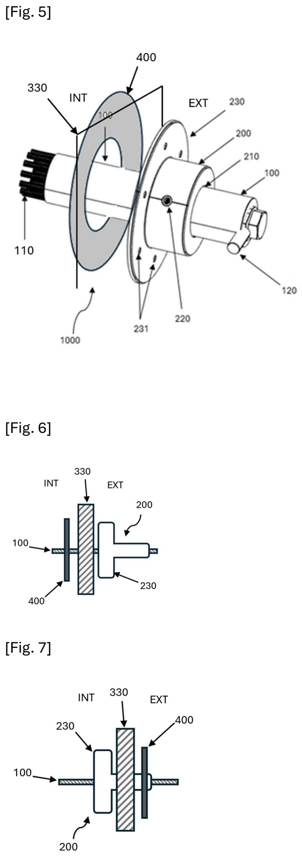

Le dispositif selon l'invention 10 est fixé sur le capot de ventilation 330 par pincement de celui-ci entre un premier élément de contact 400 et un corps secondaire 200 ou un deuxième élément de contact 500, décrits ultérieurement et illustré notamment sur la figure 3 et la figure 5.

Le dispositif selon l'invention 10 comprend un **corps principal 100,** présentant une forme allongée et supportant à une de ses extrémités un élément sensible 110, par exemple sensible aux courants de fuite induits relatifs au rotor 320 dans la machine tournante électrique 300, et une cosse 120 à l'autre de ses extrémités.

La forme allongée du corps principal 100 est de préférence tubulaire. Cependant, de manière non illustrée, elle peut aussi présenter une forme dont la section transversale est polygonale ou ovale, ce qui permet par exemple que la forme complémentaire du moyeu 210 serve de détrompeur.

Le corps principal 100 présente une face externe qui peut être lisse ou, lorsqu'elle est tubulaire, peut être filetée 140.

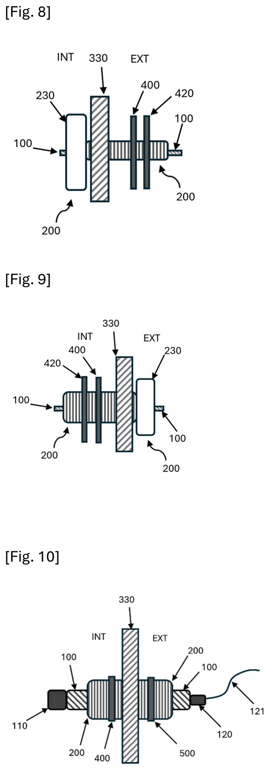

Dans une variante, illustré sur la figure 10, le corps principal 100 comprend un capteur, en l'espèce inductif. Dans ce cas, l'élément sensible 110 est un capteur inductif qui est disposé à une extrémité du corps principal 100 ; et l'autre extrémité du corps principal 100 comprend une cosse 120 comprenant un ensemble d'au moins un fil électrique 121 pour la transmission du signal qui est émis par le capteur inductif.

Dans une autre variante, illustrée sur la figure 4A ou figure 4B, le corps principal 100 comprend un dispositif de mise à la terre des courants de fuite de la machine tournante électrique 300. A cet effet, le corps principal 100 est conducteur d'électricité, l'élément sensible 110 aux courants de fuite comprend un ensemble de fibres conductrices 110 agencées à une de ses extrémités, et une cosse 120 de mise à la terre à l'autre de ses extrémités pour permettre la mise à la terre des courants de fuite induits relatifs au rotor 320 dans la machine tournante électrique 300.

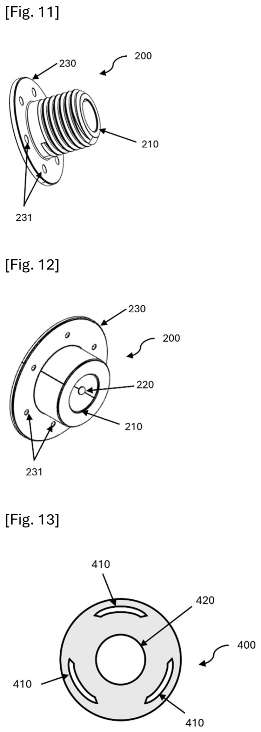

Le dispositif selon l'invention 10 comprend également un **corps secondaire 200,** destiné à venir au contact d'une face du capot de ventilation 330, ou à traverser celui-ci, et dont certains modes de réalisation sont illustrés sur la figure 11 et la figure 12.

Par « au contact », on entend que le contact peut être direct, en butée contre le capot de ventilation 330 ou à travers celui-ci ; ou un contact indirect via une pièce intermédiaire, par exemple de type rondelle, et par exemple en élastomère (non illustrée).

Le corps secondaire 200 peut comprendre une collerette 230, faisant office de platine de fixation et de butée contre le capot de ventilation 330, la collerette 230 comprenant un ensemble d'au moins trois évidements.

Le corps secondaire 200 comprend un moyeu 210 dont la forme épouse localement celle du corps principal 100.

Le moyeu 210 comprend un axe d'élongation destiné à être parallèle, et de préférence coaxial, avec l'axe d'élongation X-X de l'arbre tournant 310 de la machine tournante électrique 300.

Le moyeu 210 peut être taraudé, le taraudage 240 du moyeu 210 correspondant alors au filetage 140 du corps principal 100 (figure 4A).

Le corps principal 100 est mobile en translation, et éventuellement en rotation, par rapport au corps secondaire 200.

Par exemple si le corps principal 100 présente une surface lisse, il peut coulisser dans le moyeu 210 du corps secondaire 200 qui présente lui aussi une surface lisse. Si le corps principal 100 présente une surface filetée 140, il peut être vissé dans le moyeu 210 du corps secondaire 200 qui présente une surface taraudée.

On peut ajuster en translation la position relative du corps principal 100 et du corps secondaire 200, ce qui permet d'ajuster la position de l'élément sensible 110 par rapport à l'arbre tournant 310 selon une distance prédéterminée, réglable, éventuellement jusqu'à venir au contact de l'arbre tournant 310.

On peut prévoir que le corps principal 100 comprend un ensemble de graduations (non illustrées) pour permettre de régler la position relative du corps principal 100 et du corps secondaire 200.

On peut prévoir des moyens de blocage, configurés pour bloquer le mouvement de translation du corps principal 100 par rapport au corps secondaire 200 et assurer une solidarisation temporaire du corps principal 100 et du corps secondaire 200, ce qui permet d'ajuster la distance entre l'extrémité portant l'élément sensible 110 et l'arbre tournant 310. Par exemple, les moyens de blocage comprennent un ensemble d'au moins un trou traversant 220, de préférence taraudé radialement dans le moyeu 210 du corps secondaire 200 ; et une vis, insérable dans le trou taraudé, et configurée pour venir en butée contre le corps principal 100 lorsque le corps principal 100 est inséré dans le moyeu 210 du corps secondaire 200, de sorte à bloquer la translation du corps principal 100 dans le moyeu 210 du corps secondaire 200.

On peut aussi prévoir une goupille qui s'insère dans le trou traversant dans le moyeu 210 du corps secondaire 200 et un ensemble d'au moins un trou traversant 130 du corps principal 100, traversant radialement celui-ci.

Le capot de ventilation 330 comprend un évidement permettant le passage au moins du corps principal 100 à travers celui-ci.

Le corps principal 100 et le corps secondaire 200 sont configurés de sorte que, lorsque le dispositif selon l'invention 10 est monté sur le capot de ventilation 330, le corps principal 100 est coaxial avec l'axe X-X de l'arbre tournant 310, et l'élément sensible 110 vient au contact de l'arbre tournant 310 ou à une distance prédéterminée, réglable, de l'arbre tournant 310.

Pour maintenir le dispositif selon l'invention 10 sur le capot de ventilation 330, on prévoit un premier élément de contact 400, destiné à venir au contact d'une face du capot de ventilation 330, et par exemple en vis-à-vis du corps secondaire 200, de sorte que lorsque le capot est pincé entre le premier élément de contact 400 et le corps secondaire 200. De même, le contact peut être direct ou indirect, via une pièce intermédiaire, par exemple de type rondelle, et par exemple en élastomère.

Un mode de réalisation d'un premier élément de contact 400 est illustré sur la figure 13. Il comprend des évidements périphériques 410, en l'espèce de forme allongée et de préférence courbe. De préférence, l'ensemble des évidements périphériques 410 sont à symétrie de rotation par rapport à l'axe du moyeu 210. Le premier élément de contact 400 comprend un évidement central 430, destiné à être coaxial avec l'axe X-X.

**Dans un mode de réalisation,** le corps secondaire 200 comprend une collerette 230, qui fait office de platine de fixation.

Dans une première variante, illustrée sur la figure 6, la collerette 230 vient au contact de la face externe du capot de ventilation 330 et le premier élément de contact 400 vient au contact de la face interne du capot de ventilation 330. Ainsi le capot de ventilation 330 est pincé entre le premier élément de contact 400 et la collerette 230 du corps secondaire 200.

Dans ce cas, la collerette 230 du corps secondaire 200 et le premier élément de contact 400 peuvent être solidarisés par rivetage ou vissage et boulonnage (non illustré).

Dans une deuxième variante, illustrée sur la figure 7, la collerette 230 vient au contact de la face interne du capot de ventilation 330 et le premier élément de contact 400 vient au contact de la face externe du capot de ventilation 330.

Dans ce cas, la collerette 230 du corps secondaire 200 et le premier élément de contact 400 peuvent être solidarisés par rivetage ou vissage et boulonnage (non illustré).

Dans une troisième variante, illustrée sur la figure 8, comme dans la deuxième variante, la collerette 230 vient au contact de la face interne du capot de ventilation 330 et le premier élément de contact 400 vient au contact de la face externe du capot de ventilation 330, mais le corps secondaire 200 est en outre fileté, par exemple tel qu'illustré sur la figure 11.

Dans ce cas, la collerette 230 du corps secondaire 200 et le premier élément de contact 400 peuvent être solidarisés par vissage du premier élément de contact 400, qui sert d'écrou, sur le corps secondaire 200. On peut prévoir en outre un contre écrou 420 adjacent au premier élément de contact 400 sur le corps secondaire 200.

On peut prévoir une quatrième variante, illustrée sur la figure 9, inversée par rapport à la troisième variante de la figure 8, c'est-à-dire symétrique par rapport au capot 330. Dans ce cas, la collerette 230 vient au contact de la face externe du capot de ventilation 330 et le premier élément de contact 400 vient au contact de la face interne du capot de ventilation 330, mais le corps secondaire 200 est en outre fileté du côté de la face interne du capot de ventilation 330 par exemple tel qu'illustré sur la figure 11.

Dans ce cas, la collerette 230 du corps secondaire 200 et le premier élément de contact 400 peuvent être solidarisés par vissage du premier élément de contact 400, qui sert d'écrou, sur le corps secondaire 200. On peut prévoir en outre un contre écrou 420 adjacent au premier élément de contact 400 sur le corps secondaire 200.

Pour les variantes ci-dessus, dans le cas de rivetage ou vissage et boulonnage, on prévoit un ensemble d'**évidements** 231 dans la collerette 230, par exemple tels qu'illustrés sur la figure 11 et figure 12 ; et un ensemble d'évidements périphériques 410 du premier élément de contact 400.

Par exemple, on peut prévoir que la collerette 230 comprend un ensemble d'au moins trois évidements 231, de préférence équirépartis autour de l'axe de l'arbre tournant 310.

De même, on peut prévoir que le premier élément de contact 400 comprend un ensemble d'au moins trois évidements périphériques 410. Une vis ou un rivet passe alors par un évidement 231 de la collerette 230 et un évidement du premier élément de contact 400.

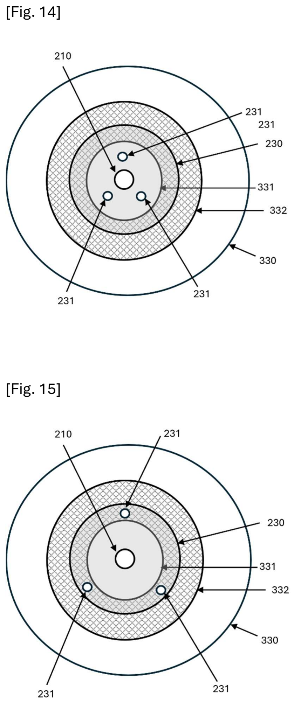

Les rivets ou les vis peuvent passer par l'évidement, dit évidement central 331, du capot, qui permet le passage du corps principal 100, comme illustré sur la figure 14 ; ou passer par des trous ad hoc ; ou encore par un évidement périphérique 332 du capot de ventilation 330, comme illustré sur la figure 15.

Au moins un évidement peut être taraudé, pour y permettre le vissage d'une vis ou d'une tige filetée.

On peut prévoir qu'au moins un évidement présente une forme allongée, de préférence courbe. De préférence, l'ensemble des évidements sont à symétrie de rotation par rapport à l'axe du moyeu 210, à l'instar de ceux illustrés sur la figure 13, ce qui facilite l'insertion d'une vis ou d'une tige filetée, voire d'un rivet.

**Dans un autre mode de réalisation,** le corps secondaire 200 est longiligne et présente un filetage sur sa face externe, comme illustré par exemple sur la figure 10.

Dans ce cas, le premier élément de contact 400, qui se présente par exemple sous la forme d'un écrou, comprend un taraudage correspondant au filetage du corps secondaire 200, de sorte que le premier élément de contact 400 est mobile en rotation et en translation par rapport au corps secondaire 200 pour venir en butée contre le capot de ventilation 330.

Dans ce cas, le corps secondaire 200 fait saillie d'un côté ou de l'autre de l'évidement du capot lorsqu'il est monté sur celui-ci.

Avantageusement toutefois le corps secondaire 200 fait saillie de part et d'autre de l'évidement du capot lorsqu'il est monté sur celui-ci.

Dans ce deuxième mode de réalisation, on prévoit de préférence en outre un deuxième élément de contact 500, qui se présente par exemple sous la forme d'un contre-écrou.

Le deuxième élément de contact 500 comprenant un taraudage correspondant au filetage du corps secondaire 200, de sorte que le deuxième élément de contact 500 est mobile en rotation et en translation par rapport au corps secondaire 200 pour venir en butée contre le capot de ventilation 330, sur une face opposée à celle du premier élément de contact 400. Ainsi le capot de ventilation 330 est pincé entre le premier élément de contact 400 et le deuxième élément de contact 500.

On peut ainsi agir sur la position relative du corps secondaire 200 par rapport au capot de ventilation 330.

Ainsi il est possible de régler la distance entre l'élément sensible 110 et l'arbre tournant 310 en agissant sur au moins l'un des moyens suivants :
- la position relative du corps principal 100 par rapport au corps secondaire 200, et
- la position relative du corps secondaire 200 par rapport au capot de ventilation 330.

On peut prévoir qu'au moins l'un parmi le premier élément de contact 400 et le deuxième élément de contact 500 comprend un ensemble d'au moins deux protubérances, ou ailettes, à l'instar des vis papillon, de sorte à faciliter sa manipulation en rotation.

Par exemple le corps principal 100 comprend au moins l'un parmi :
- un capteur inductif, capacitif ou magnétique ;
- un dispositif de mise à la terre de la machine tournante électrique 300.

Par exemple le corps principal 100 est conducteur d'électricité, et supporte à une de ses extrémités un ensemble de fibres conductrices 110 agencées pour permettre la mise à la terre des courants de fuite induits relatifs au rotor 320 dans la machine tournante électrique 300, et une cosse 120 de mise à la terre à l'autre de ses extrémités.

Avantageusement grâce à l'invention, le capteur, inductif, capacitif ou magnétique, et le dispositif de mise à la terre de la machine tournante électrique 300 sont interchangeables dans le moyeu 210 du corps secondaire 200.

### Nomenclature

10 Dispositif selon l'invention
100 corps principal
   110 élément sensible / fibres conductrices
   120 cosse
      121 fil électrique
   130 trou traversant radial dans le corps principal
   140 filetage
200 corps secondaire
   210 moyeu
   220 évidement / trou traversant (taraudé ou non)
   230 platine de fixation / collerette
      231 évidement de la platine
   240 taraudage du moyeu
300 machine tournante électrique
   310 arbre tournant
   320 rotor
   330 capot de ventilation
      331 évidement central du capot de ventilation
      332 évidement périphérique du capot de ventilation
400 premier élément de contact
   410 évidement périphérique
   420 contre écrou
   430 évidement central
500 deuxième élément de contact
INT intérieur du capot de ventilation
EXT extérieur du capot de ventilation

## Revendications

1. Dispositif (10) pour machine tournante électrique (300), la machine tournante électrique (300) comprenant un arbre tournant (310), un rotor (320) et un capot de ventilation (330), ledit dispositif étant configuré pour être monté sur le capot de ventilation (330) grâce à un évidement dudit capot de ventilation (330), de manière amovible ;
**caractérisé en ce que** ledit dispositif comprend :
- un corps principal (100), présentant une forme allongée et supportant à une de ses extrémités un élément sensible (110) , et une cosse (120) à l'autre de ses extrémités ;
- un corps secondaire (200), destiné à venir au contact d'une face du capot de ventilation (330) et comprenant :
∘ un moyeu (210) dont la forme épouse localement celle du corps principal (100),
∘ le corps principal (100) étant mobile au moins en translation par rapport au corps secondaire (200) à travers ledit moyeu (210),
- le corps principal (100) et le corps secondaire (200) étant configurés de sorte que, lorsque le dispositif est monté sur le capot de ventilation (330), le corps principal (100) est coaxial avec l'axe de l'arbre tournant (310), et l'élément sensible (110) vient au contact de l'arbre tournant (310) ou à une distance prédéterminée, réglable, de l'arbre tournant (310) ;
- des moyens de blocage, configurés pour bloquer le mouvement de translation du corps principal (100) par rapport au corps secondaire (200) et assurer une solidarisation temporaire du corps principal (100) et du corps secondaire (200), permettant d'ajuster la distance entre l'extrémité portant l'élément sensible (110) et l'arbre tournant (310) ;
le dispositif comprenant en outre :
- un premier élément de contact (400) mobile en translation selon l'axe d'élongation du corps principal (100) et destiné à venir au contact d'une face du capot de ventilation (330), de sorte que lorsque le dispositif est monté sur le capot, le capot est pincé entre un premier élément de pinçage et un deuxième élément de pinçage, dont l'un parmi le premier et le deuxième élément de pinçage est le premier élément de contact (400).

2. Dispositif selon la revendication 1, dans lequel le corps secondaire (200) comprend une collerette (230), faisant office de platine de fixation, la collerette (230) comprenant un ensemble d'au moins trois évidements, la collerette (230) faisant office d'autre élément de pinçage.

3. Dispositif selon la revendication 1 ou 2, dans lequel le premier élément de contact (400) comprend comprenant un ensemble d'au moins trois évidements.

4. Dispositif selon la revendication 2 ou 3, dans lequel au moins un évidement présente une forme circulaire, éventuellement taraudée, pour permettre le passage d'une vis ou d'une tige filetée.

5. Dispositif selon l'une quelconque des revendications 2 à 4, dans lequel au moins un évidement présente une forme allongée de préférence courbe, l'ensemble des évidements étant de préférence à symétrie de rotation par rapport à l'axe du moyeu (210).

6. Dispositif selon l'une quelconque des revendications précédentes, dans lequel le corps secondaire (200) comprend une face externe qui présente un filetage, et dans lequel le premier élément de contact (400) comprend un taraudage correspondant au filetage du corps secondaire (200), de sorte que le premier élément de contact (400) est mobile en rotation et en translation par rapport au corps secondaire (200) pour venir en butée contre le capot de ventilation (330), le corps secondaire (200) faisant saillie de part et d'autre de l'évidement du capot lorsqu'il est monté sur celui-ci.

7. Dispositif selon la revendication 6, comprenant en outre un deuxième élément de contact (500), faisant office d'autre élément de pinçage, le deuxième élément de contact (500) comprenant un taraudage correspondant au filetage du corps secondaire (200), de sorte que le deuxième élément de contact (500) est mobile en rotation et en translation par rapport au corps secondaire (200) pour venir en butée contre le capot de ventilation (330), sur une face opposée à celle contre laquelle le premier élément de contact (400) vient en butée.

8. Dispositif selon la revendication 6 ou 7, dans lequel au moins l'un parmi le premier élément de contact (400) et le deuxième élément de contact (500) comprend un ensemble d'au moins deux protubérances, ou ailettes, de sorte à faciliter sa manipulation en rotation.

9. Dispositif selon l'une quelconque des revendications précédentes, dans lequel le corps principal (100) comprend au moins l'un parmi :
- un capteur inductif, capacitif ou magnétique ;
- un dispositif de mise à la terre de la machine tournante électrique (300), le corps principal (100) étant conducteur d'électricité, et supportant à une de ses extrémités un ensemble de fibres conductrices (110) agencées pour permettre la mise à la terre des courants de fuite induits relatifs au rotor (320) dans la machine tournante électrique (300), et une cosse (120) de mise à la terre à l'autre de ses extrémités.

10. Dispositif selon la revendication 9, comprenant :
- un capteur inductif, capacitif ou magnétique, et
- un dispositif de mise à la terre de la machine tournante électrique (300),
Le capteur inductif, capacitif ou magnétique et le dispositif de mise à la terre de la machine tournante électrique (300) étant interchangeables dans le moyeu (210) du corps secondaire (200).
